Europäisches Patentamt

European Patent Office

Office européen des brevets

(11) Veröffentlichungsnummer: **0 364 397**
**A1**

(12) **EUROPÄISCHE PATENTANMELDUNG**

(21) Anmeldenummer: 89810703.2

(22) Anmeldetag: 19.09.89

(51) Int. Cl.⁵: **F16K 17/10**

(30) Priorität: 13.10.88 CH 3822/88

(43) Veröffentlichungstag der Anmeldung:
18.04.90 Patentblatt 90/16

(84) Benannte Vertragsstaaten:
**BE DE ES FR GB IT NL SE**

(71) Anmelder: **GEBRÜDER SULZER
AKTIENGESELLSCHAFT
Zürcherstrasse 9
CH-8401 Winterthur(CH)**

(72) Erfinder: **Tiefenthaler, Edelbert
Schützenhausstrasse 13
CH-8353 Elgg(CH)**

(54) **Einrichtung zum Steuern eines Sicherheitsventils.**

(57) Das Sicherheitsventil (1) weist einen Schliessteil (3) mit einem in einem Servokolbenraum (11,12) bewegbaren Servokolben (5) auf. Ausserdem ist ein Hilfsventil (10) vorgesehen, dessen Schliesskörper (20) in seiner Schliessrichtung durch eine vorbestimmte Kraft belastet ist und bei einem dieser Kraft entsprechenden, an ihm anstehenden Druck öffnet. Dem Hilfsventil (10) ist ein Kolben (26) zugeordnet, der mit seinen beiden Stirnseiten in je einen Kolbenraum (27,28) ragt. Der eine Kolbenraum (27) ist unmittelbar mit dem durch das Sicherheitsventil (1) vor zu hohem Druck zu schützenden Raum verbunden, wogegen der andere Kolbenraum (28) einerseits mit der Zuströmseite des Hilfsventils (10) und andererseits über eine Drosselstelle (31) mit dem durch das Sicherheitsventil (1) vor zu hohem Druck zu schützenden Raum verbunden ist. Es sind Mittel (32) zum kraftschlüssigen Einwirken des Kolbens (26) auf den Schliesskörper (20) vorhanden und die Querschnittsfläche des Kolbens (26) ist grösser als die dem Druck im anderen Kolbenraum (28) ausgesetzte Fläche des Schliesskörpers (20). Abströmseitig des Schliesskörpers (20) ist eine zu der dem Schliessteil (3) des Sicherheitsventils (1) abgewendeten Servokolbenseite führende Verbindung (25) vorgesehen. Der Schliessteil (3) ist im Gehäuse (2) derart angeordnet, dass beim Oeffnen des Schliesskörpers (20) der Schliessteil (3) durch Belasten des Servokolbens (5) öffnet.

## Einrichtung zum Steuern eines Sicherheitsventils

Die Erfindung betrifft eine Einrichtung zum Steuern eines Sicherheitsventils, dessen Schliessteil mit einem in einem Servokolbenraum bewegbaren Servokolben versehen ist, mit einem Hilfsventil, dessen Schliesskörper in seiner Schliessrichtung durch eine vorbestimmte Kraft belastet ist und bei einem dieser Kraft entsprechenden, an ihm anstehenden Druck öffnet, wobei dem Hilfsventil ein Kolben zugeordnet ist, der mit seinen beiden Stirnseiten in je einen Kolbenraum ragt, von denen der eine Kolbenraum unmittelbar mit dem durch das Sicherheitsventil vor zu hohem Druck zu schützenden Raum verbunden ist, wogegen der andere Kolbenraum einerseits mit der Zuströmseite des Hilfsventils und andererseits über eine Drosselstelle mit dem durch das Sicherheitsventil vor zu hohem Druck zu schützenden Raum verbunden ist, wobei ferner Mittel zum kraftschlüssigen Einwirken des Kolbens auf den Schliesskörper des Hilfsventils vorhanden sind und wobei die Querschnittsfläche des Kolbens grösser ist als die dem Druck im anderen Kolbenraum ausgesetzte Fläche des Schliesskörpers.

Eine Steuereinrichtung dieser Art ist aus der EP-PS 110 210 bekannt. Bei ihr ist der Schliessteil des Sicherheitsventils im Gehäuse derart angeordnet, dass sein Servokolben in der geschlossenen Sicherheitsstellung stets druckbelastet ist und bei Ueberschreiten des Sicherheitsdruckes durch Oeffnen des Schliesskörpers des Hilfsventils entlastet wird, wodurch das Sicherheitsventil öffnet. Bei dieser Anordnung kann der während der Sicherheitsstellung stets druckbelastete Servokolbenraum mehr oder weniger mit Kondensat gefüllt sein, das sich aus Dampf aus dem abzusichernden Raum bildet. Beim Oeffnen des Hilfsventils verdampft das Kondensat, wobei dieser Dampf ein rasches Oeffnen des Sicherheitsventils behindert.

Der Erfindung liegt die Aufgabe zugrunde, die Steuereinrichtung der eingangs genannten Art so zu verbessern, dass Behinderungen der Oeffnungsbewegung des Sicherheitsventils infolge Dampfbildung nicht mehr auftreten können.

Diese Aufgabe wird erfindungsgemäss dadurch gelöst, dass abströmseitig des Schliesskörpers des Hilfsventils eine zu der dem Schliessteil des Sicherheitsventils abgewendeten Servokolbenseite führende Verbindung vorgesehen ist und dass der Schliessteil des Sicherheitsventils im Gehäuse derart angeordnet ist, dass beim Oeffnen des Schliesskörpers des Hilfsventils der Schliessteil des Sicherheitsventils durch Belasten des Servokolbens öffnet.

Durch diese Gestaltung sind also die Servokolbenräume in der geschlossenen Sicherheitsstellung stets druckentlastet, so dass sich dort kein Kondensat bilden und sammeln kann. Erst beim Oeffnen des Hilfsventils wegen Ueberschreitens des Sicherheitsdruckes strömt Dampf in den entsprechenden Servokolbenraum und belastet den Servokolben, wodurch der Schliessteil des Sicherheitsventils sich in öffnendem Sinne bewegt, und zwar unbehindert. Eine Ansammlung von Kondensat im Servokolbenraum vor dem Oeffnen des Sicherheitsventils ist also vermieden.

Einige Ausführungsbeispiele der Erfindung werden in der folgenden Beschreibung anhand der Zeichnung näher erläutert. Es zeigen:

Fig. 1 schematisch einen Längsschnitt durch die erfindungsgemässe Steuereinrichtung mit dem Sicherheitsventil und

Fig. 2 und 3 je eine Abwandlung der Kolbenanordnung.

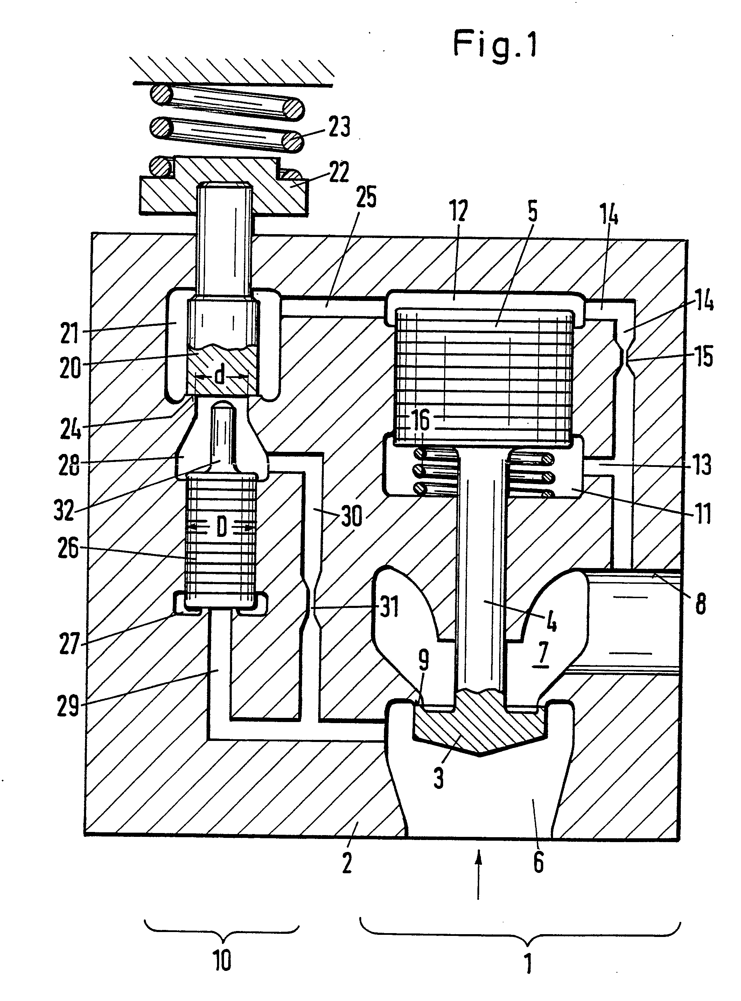

Im rechten Teil der Fig. 1 ist ein Sicherheitsventil 1 dargestellt, das im wesentlichen aus einem Ventilgehäuse 2, einem beweglichen Schliessteil 3 und einem mit diesem über eine Stange 4 fest verbundenen Servokolben 5 besteht. Das Ventilgehäuse 2 weist eine Zulaufkammer 6 auf, an die eine nicht dargestellte, gegen zu hohen Druck abzusichernde Dampfleitung angeschlossen ist. Das Ventilgehäuse 2 weist ferner eine Ablaufkammer 7 auf, die in eine seitliche Bohrung 8 übergeht, an der eine Ablaufleitung angeschlossen sein kann. Zwischen der Zulaufkammer 6 und der Ablaufkammer 7 ist im Ventilgehäuse 2 eine Ventilsitzfläche 9 vorgesehen, die mit einer passenden Dichtfläche am beweglichen Schliessteil 3 zusammenwirkt.

Beiderseits des Servokolbens 5 ist im Ventilgehäuse 2 ein Servokolbenraum 11 und 12 vorgesehen. Die Räume 11 und 12 sind über einen Kanal 13 bzw. 14 mit der Bohrung 8 verbunden. Im Kanal 14 oberhalb der Abzweigung des Kanals 13 befindet sich eine Drosselstelle 15. Im Servokolbenraum 11 ist eine Feder 16 angeordnet, die den Servokolben 5 im drucklosen Zustand des Sicherheitsventils in die gezeichnete obere Lage drückt, in der der Schliessteil 3 auf der Ventilsitzfläche 9 dicht aufsitzt.

In Fig. 1 links vom Sicherheitsventil 1 befindet sich im Gehäuse 2 ein Hilfsventil 10, dessen Schliesskörper 20 mit seinem in der Zeichnung oberen Ende aus dem Gehäuse herausragt. Auf diesem Ende ruht ein Federteller 22 mit einer Feder 23, die den Schliesskörper 20 auf eine Ventilsitzfläche 24 im Gehäuse 2 drückt. Oberhalb der Ventilsitzfläche 24 ist der Schliesskörper 20 von einem Abströmraum 21 umgeben, der über einen Kanal 25 mit dem Servokolbenraum 12 in Verbindung steht.

Dem Hilfsventil 10 ist ein Kolben 26 zugeordnet, der an beiden Stirnseiten von je einem Kolbenraum 27 und 28 umgeben ist. Der Kolbenraum 27 steht über einen Kanal 29 mit der Zulaufkammer 6 in Verbindung und ausserdem über einen Kanal 30 mit Drosselstelle 31 mit dem Kolbenraum 28. Als Mittel zum kraftschlüssigen Einwirken des Kolbens 26 auf den Schliesskörper 20 ist der Kolben mit einem stangenartigen Fortsatz 32 versehen. Der Durchmesser D des Kolbens 26 ist grösser als der Innendurchmesser d der Sitzfläche des Schliesskörpers 20.

Die Einrichtung funktioniert wie folgt: Im Normalbetrieb der das Sicherheitsventil 1 enthaltenden Anlage ist der Schliessteil 3 in geschlossener Stellung und in der Zuflusskammer 6 steht Dampf unter Druck an. Dampf unter gleichem Druck ist auch in den Kanälen 29 und 30 sowie in den mit diesen verbundenen Kolbenräumen 27 bzw. 28 enthalten. Da auch der Schliesskörper 20 des Hilfsventils 10 sich in geschlossener Stellung befindet, sind der Raum 21, die Servokolbenräume 11 und 12 und die Ablaufkammer 7 auf einem wesentlich niedrigeren Druck als der Dampf in der Zulaufkammer 6 oder drucklos.

Steigt der Druck in der Zulaufkammer 6 bis zum Ansprechdruck an, so bewegt sich beim Erreichen des Sicherheitsdruckes der Schliesskörper 20 nach oben, so dass Dampf aus dem Kolbenraum 28 in den Abströmraum 21 und von dort über den Kanal 25 zum Servokolbenraum 12 strömt. Infolge der Oeffnungsbewegung des Schliesskörpers 20 sinkt im Kolbenraum 28 der Druck, was ohne das Vorhandensein des Kolbens 26 zu einem raschen Schliessen des Hilfsventils 10 führen würde. Da aber im Kolbenraum 27 der volle Dampfdruck ansteht und im Kolbenraum 28 der Druck gefallen ist, wirkt auf den Kolben 26 eine Druckdifferenz, die den Kolben ebenfalls nach oben bewegt, so dass sich der Fortsatz 32 am Schliesskörper 20 anlegt und diesen weiter öffnet und in Offenstellung hält. Die dadurch zum Servokolbenraum 12 anhaltende Dampfzufuhr baut in diesem Raum einen Druck auf, der den Servokolben 5 belastet und ein Verschieben des Schliessteils 3 in Fig. 1 nach unten zur Folge hat. Der Schliessteil 3 öffnet also das Sicherheitsventil, und es strömt Dampf über die Ablaufkammer 7 und die Bohrung 8 ab. Sowie der Dampfdruck in der Zulaufkammer 6 den Schliessdruck des Hilfsventils 10 unterschreitet, drückt die Feder 23 den Schliesskörper 20 wieder in die gezeichnete Schliesslage und auch der Kolben 26 bewegt sich in seine Ausgangslage zurück. Ueber den Kanal 14 und die Drosselstelle 15 wird der Druck im Servokolbenraum 12 abgesenkt und der Servokolben 5 durch die Druckdifferenz am Schliessteil 3 nach oben bewegt bis dieser wieder seine Schliessstellung innehat.

Durch das Vorhandensein des Kolbens 26 wird also ein ständiges Oeffnen und Schliessen, das sogenannte Flattern, des Hilfsventils 10 vermieden.

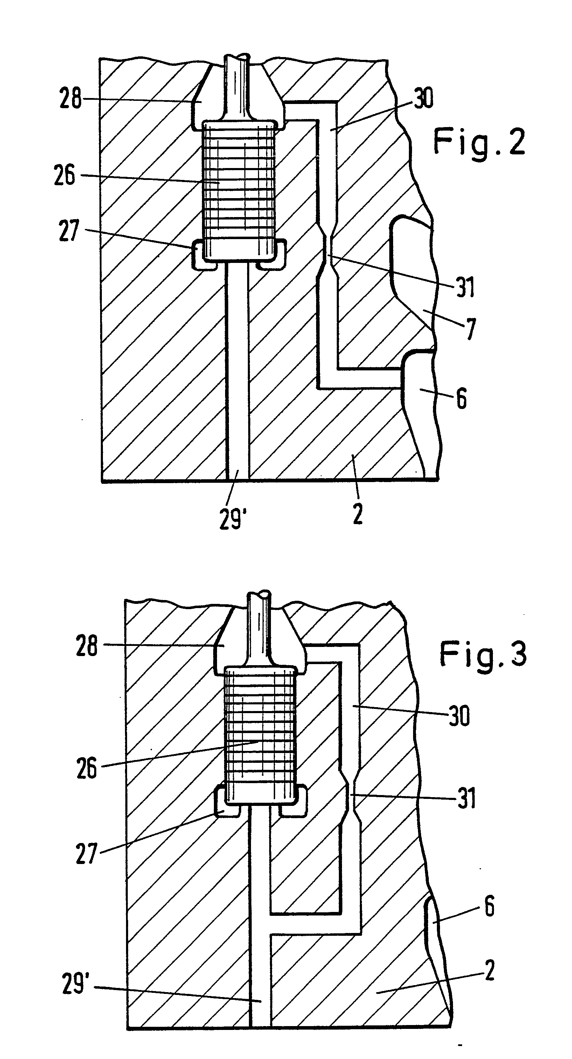

Abweichend von der Ausführungsform nach Fig. 1 geht bei der Ausführungsform nach Fig. 2 der Kanal 29' nicht von der Zulaufkammer 6 aus, sondern ist über eine nicht gezeichnete, direkt am Ventilgehäuse 2 angeschlossene Leitung mit einem ebenfalls nicht dargestellten Druckbehälter verbunden, der den gegen zu hohen Druck abzusichernden Raum enthält. Dieser Raum ist ausserdem in nicht dargestellter Weise mit der Zulaufkammer 6 des Sicherheitsventils verbunden. Der die Drosselstelle 31 enthaltende Kanal 31 steht dagegen - wie im Beispiel nach Fig. 1 - mit der Zulaufkammer 6 in Verbindung.

Beim Ausführungsbeispiel nach Fig. 3 steht der Kanal 29' wiederum mit dem Druckbehälter direkt in Verbindung, wogegen der die Drosselstelle 31 enthaltende Kanal 30 nicht von der Zulaufkammer 6, sondern vom Kanal 29' abzweigt.

Beide Ausführungsbeispiele nach Fig. 2 und 3 funktionieren in grundsätzlich gleicher Weise wie die Steuereinrichtung gemäss Fig. 1.

## Ansprüche

Einrichtung zum Steuern eines Sicherheitsventils, dessen Schliessteil mit einem in einem Servokolbenraum bewegbaren Servokolben versehen ist, mit einem Hilfsventil, dessen Schliesskörper in seiner Schliessrichtung durch eine vorbestimmte Kraft belastet ist und bei einem dieser Kraft entsprechenden, an ihm anstehenden Druck öffnet, wobei dem Hilfsventil ein Kolben zugeordnet ist, der mit seinen beiden Stirnseiten in je einen Kolbenraum ragt, von denen der eine Kolbenraum unmittelbar mit dem durch das Sicherheitsventil vor zu hohem Druck zu schützenden Raum verbunden ist, wogegen der andere Kolbenraum einerseits mit der Zuströmseite des Hilfsventils und andererseits über eine Drosselstelle mit dem durch das Sicherheitsventil vor zu hohem Druck zu schützenden Raum verbunden ist, wobei ferner Mittel zum kraftschlüssigen Einwirken des Kolbens auf den Schliesskörper des Hilfsventils vorhanden sind und wobei die Querschnittsfläche des Kolbens grösser ist als die dem Druck im anderen Kolbenraum ausgesetzte Fläche des Schliesskörpers, dadurch **gekennzeichnet**, dass abströmseitig des Schliesskörpers des Hilfsventils eine zu der dem Schliessteil des Sicherheitsventils abgewendeten Servokolbenseite führende Verbindung vorgesehen ist und dass der Schliessteil des Sicherheitsventils im Gehäuse derart angeordnet ist, dass beim Oeffnen des Schliesskörpers des Hilfsventils der Schliessteil des Sicherheitsventils durch Belasten des Servo-

kolbens öffnet.

## Fig.1

Fig.2

Fig.3

# EUROPÄISCHER RECHERCHENBERICHT

Nummer der Anmeldung

EP 89 81 0703

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 110 210 (GEBR. SULZER AG) <br> * Seite 6, Zeile 6 - Seite 7, Zeile 7 * <br> --- | 1 | F 16 K 17/10 |
| Y | US-A-2 573 231 (BENDIX AVIATION CORP.) <br> * Spalte 2, Zeilen 43-54 * <br> --- | 1 | |
| A | US-A-2 587 212 (T. PLACETTE) <br> * Spalte 4, Zeilen 4-29 * <br> --- | 1 | |
| A | FR-A-1 577 361 (COMMISSARIAT A L'ENERGIE ATOMIQUE) <br> * Zusammenfassung * <br> --- | 1 | |
| A | EP-A-0 116 247 (COMMISSARIAT A L'ENERGIE ATOMIQUE) <br> --- | | |
| A | DE-A-2 202 959 (ZVU CHEMICKA A POTRAVINARSKA ZARIZENI, N.P.) <br> --- | | |
| A | US-A-3 589 390 (GRAHAM-WHITE SALES CORP.) <br> ----- | | |

**RECHERCHIERTE SACHGEBIETE (Int. Cl.5)**

F 16 K 17/00

Der vorliegende Recherchenbericht wurde für alle Patentansprüche erstellt

| Recherchenort | Abschlußdatum der Recherche | Prüfer |
|---|---|---|
| DEN HAAG | 29-12-1989 | DE SMET F.P. |